(19) Europäisches Patentamt / European Patent Office / Office européen des brevets

(11) **EP 2 446 230 B1**

(12) **FASCICULE DE BREVET EUROPEEN**

(45) Date de publication et mention
de la délivrance du brevet:
**02.09.2015 Bulletin 2015/36**

(21) Numéro de dépôt: **10734935.9**

(22) Date de dépôt: **25.06.2010**

(51) Int Cl.:
*G01D 7/02* *(2006.01)*          *G10H 1/055* *(2006.01)*
*G01D 5/12* *(2006.01)*          *G10H 1/00* *(2006.01)*

(86) Numéro de dépôt international:
**PCT/EP2010/059089**

(87) Numéro de publication internationale:
**WO 2010/149781 (29.12.2010 Gazette 2010/52)**

(54) **PROCEDE ET APPAREIL DE CONVERSION D'UN DEPLACEMENT D'UN OBJET MAGNETIQUE EN UN SIGNAL DIRECTEMENT PERCEPTIBLE, INSTRUMENT INCORPORANT CET APPAREIL**

VERFAHREN UND VORRICHTUNG ZUR UMWANDLUNG EINER VERSCHIEBUNG EINES MAGNETISCHEN OBJEKTS IN EIN DIREKT WAHRNEHMBARES SIGNAL UND INSTRUMENT MIT DIESER VORRICHTUNG

METHOD AND APPARATUS FOR CONVERTING A DISPLACEMENT OF A MAGNETIC OBJECT INTO A DIRECTLY PERCEPTIBLE SIGNAL, INSTRUMENT INCORPORATING THIS APPARATUS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **26.06.2009 FR 0954379**

(43) Date de publication de la demande:
**02.05.2012 Bulletin 2012/18**

(73) Titulaire: **Commissariat à l'Énergie Atomique et aux Énergies Alternatives
75015 Paris (FR)**

(72) Inventeurs:
• **DOUTAZ, Jérôme
  F-38000 Grenoble (FR)**

• **BLANPAIN, Roland
  F-38380 Entre Deux Guiers (FR)**
• **CATTIN, Viviane
  F-38120 Saint Egreve (FR)**

(74) Mandataire: **Colombo, Michel et al
Brevinnov
310 avenue Berthelot
69008 Lyon (FR)**

(56) Documents cités:
**WO-A1-2008/087541      JP-A- 2004 085 598
US-A- 5 025 705**

**Description**

L'invention concerne un procédé et un appareil de conversion d'un déplacement d'un objet magnétique par rapport à un capteur de champ magnétique en un signal directement perceptible par un être humain. L'invention concerne également un instrument incorporant cet appareil de conversion.

Des procédés connus de conversion comportent :

- la mesure d'un champ magnétique modifié en fonction du déplacement de l'objet magnétique, et
- le réglage d'au moins un paramètre du signal directement perceptible en fonction du champ magnétique mesuré.

Par exemple, la demande de brevet JP 2004-08 55 98 décrit un tel procédé. Dans ce procédé, l'amplitude du champ magnétique mesurée selon une direction est utilisée pour régler un paramètre d'un signal audible.

Toutefois, l'utilisation de la seule amplitude ne permet pas de rendre facilement perceptible simultanément plusieurs caractéristiques du déplacement de l'objet. Par exemple, il est difficile de rendre simultanément perceptible la vitesse de déplacement de l'objet et une rotation de l'objet sur lui-même ou une variation de cette vitesse.

L'invention vise à remédier à cet inconvénient en proposant un procédé de conversion permettant de rendre perceptible de façon différente les caractéristiques du champ magnétique mesuré et donc les caractéristiques du déplacement de l'objet magnétique.

Elle a donc pour objet un tel procédé de conversion comportant :

- l'acquisition d'une succession temporelle de mesures du champ magnétique pendant une fenêtre temporelle glissante de durée prédéterminée,
- la construction à partir de cette succession temporelle de mesures acquise de plusieurs signaux représentant chacun une caractéristique du champ magnétique mesuré fonction d'une caractéristique correspondante du déplacement de l'objet, et
- le réglage de plusieurs paramètres du signal directement perceptible en fonction de ces signaux pour rendre directement perceptible ces caractéristiques.

Le fait de traiter une succession temporelle de mesures permet de relever simultanément plusieurs caractéristiques du champ magnétique modifié par le déplacement de l'objet et donc de rendre perceptibles simultanément plusieurs caractéristiques du déplacement de l'objet.

Les modes de réalisation de ce procédé peuvent comporter une ou plusieurs des caractéristiques suivantes :

- au moins l'un des signaux construits est indépendant de la position dans l'espace de l'objet magnétique ;
- les signaux sont susceptible de varier indépendamment les uns des autres, et le réglage de chaque paramètre est fonction d'un signal construit respectif de manière à rendre directement et simultanément perceptibles chacune des caractéristiques du champ magnétique indépendamment les unes des autres ;
- la construction des signaux est obtenue par filtrage adapté de la succession temporelle de mesures sur une base de plusieurs fonctions orthogonales ;
- les fonctions orthogonales sont des fonctions d'Anderson ;
- la construction des signaux est obtenue en filtrant la succession temporelle de mesures à l'aide d'un banc de filtres dont les bandes passantes à -3 dB ne se chevauchent pas et dont les facteurs de qualité sont égaux ;
- le banc de filtres est composé de douze filtres ;
- le signal directement perceptible par un être humain est un signal audible et les paramètres réglés du signal audible sont choisis dans le groupe comprenant le volume, le timbre, la fréquence d'un son et la durée d'un son ;
- le signal directement perceptible est un signal visuel et les paramètres réglés de ce signal visuel sont choisis dans le groupe comprenant la direction d'un faisceau lumineux, la couleur d'un faisceau lumineux ou d'un pixel d'un écran, l'intensité d'un faisceau lumineux ou d'un pixel d'un écran.

Ces modes de réalisation du procédé présentent en outre les avantages suivants :

- disposer d'un signal indépendant de la position dans l'espace de l'objet magnétique permet de rendre perceptible seulement une variation de la position de cet objet et non pas sa position,
- l'utilisation de signaux indépendants les uns des autres simplifie l'utilisation et l'apprentissage pour l'utilisateur de ce procédé,
- le filtrage adapté sur des fonctions d'Anderson permet d'ajuster le signal perceptible en modifiant simplement l'orientation sur lui-même de l'objet magnétique lors de son déplacement ;
- l'utilisation d'un banc de filtres dont les bandes passantes sont contiguës et dont les facteurs de qualité sont égaux simplifie l'utilisation et l'apprentissage par l'utilisateur de ce procédé car, notamment, il existe alors une analogie entre ce banc de filtres et la théorie des notes de musique ;
- l'utilisation de douze filtres dans le banc permet de couvrir une octave.

L'invention a également pour objet un appareil de conversion d'un déplacement d'un objet magnétique en un signal directement perceptible par un être humain, cet appareil comportant :

- un capteur apte à mesurer un champ magnétique modifié en fonction du déplacement de l'objet magnétique,
- un calculateur apte à régler au moins un paramètre du signal directement perceptible en fonction du champ magnétique mesuré, ce calculateur étant apte à cet effet:

    • à acquérir une succession temporelle de mesures du champ magnétique pendant une fenêtre temporelle glissante de durée prédéterminée

    • à construire à partir de cette succession temporelle de mesures acquise plusieurs signaux représentant chacun une caractéristique du champ magnétique mesuré fonction d'une caractéristique correspondante du déplacement de l'objet, et

    • à régler plusieurs paramètres du signal directement perceptible en fonction de ces signaux pour rendre directement perceptibles ces caractéristiques.

Enfin, l'invention a également pour objet un instrument comportant un object magnétique déplaçable par un être humain et l'appareil ci-dessus de conversion des déplacements de l'objet magnétique en un signal directement perceptible par un être humain.

L'invention sera mieux comprise à la lecture de la description qui va suivre, donnée uniquement à titre d'exemple non limitatif et faite en se référant aux dessins sur lesquels :

- la figure 1 est une illustration schématique d'un instrument incorporant un appareil de conversion du déplacement d'un objet magnétique en un signal directement audible,
- la figure 2 est un organigramme d'un procédé de conversion du déplacement d'un objet magnétique en un signal directement audible à l'aide de l'appareil de la figure 1,
- la figure 3 est un graphe illustrant schématiquement la forme d'onde d'un champ magnétique mesuré,
- les figures 4a à 4c sont des graphes illustrant schématiquement les formes d'onde d'une base orthogonale de fonctions d'Anderson en mode champ,
- la figure 5 est un organigramme d'un autre procédé de conversion du déplacement d'un objet magnétique en un signal directement audible,
- la figure 6 est une illustration schématique de la répartition des bandes passantes d'un banc de filtres utilisé pour la mise en oeuvre du procédé de la figure 5
- la figure 7 est une illustration schématique de réponses de trois filtres du banc de filtres mis en oeuvre dans le procédé de la figure 5, et

- la figure 8 est une illustration schématique de l'assemblage des réponses successives d'un filtre pour former un signal directement audible, et
- la figure 9 est une illustration schématique d'un instrument incorporant un appareil de conversion du déplacement d'un objet magnétique en un signal directement perceptible autrement que par l'ouïe.

Dans ces figures, les mêmes références sont utilisées pour désigner les mêmes éléments.

Dans la suite de cette description, les caractéristiques et fonctions bien connues de l'homme du métier ne sont pas décrites en détail.

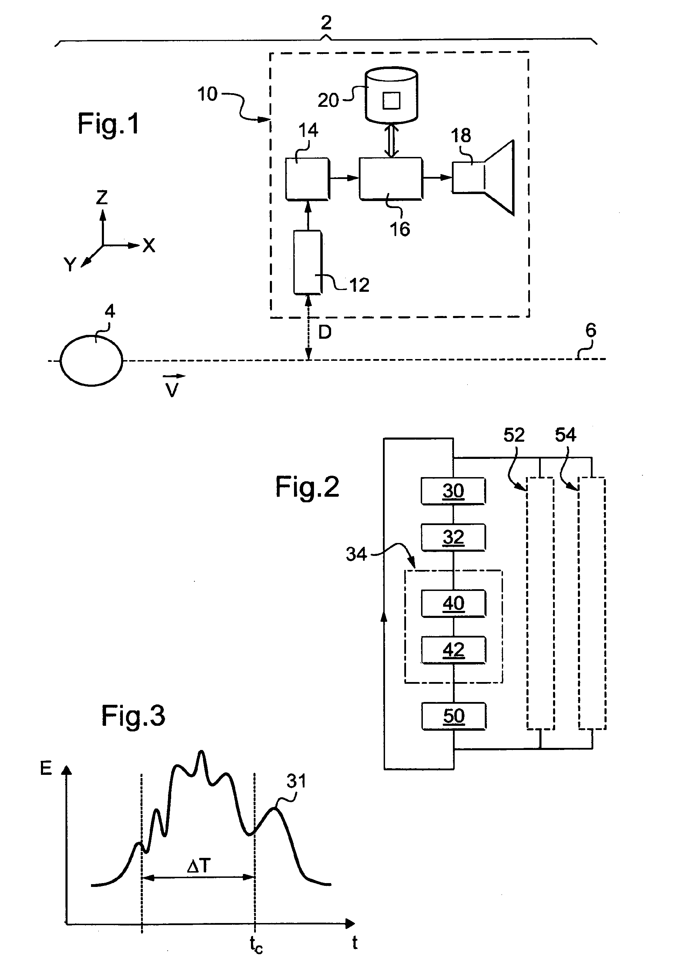

La figure 1 représente un instrument 2 générant un signal directement perceptible par un être humain. Dans ce mode de réalisation, l'instrument 2 est décrit dans le cas particulier où il génère un signal directement audible par un être humain. Par exemple, l'instrument 2 est un instrument de musique.

Cet instrument 2 comporte un objet dont le matériau constitutif présente des propriétés magnétiques (terres rares, ferrites, aciers, ...) 4 et déplaçable manuellement par un utilisateur. L'objet 4 est par exemple un aimant permanent bipolaire.

Ici, l'objet 4 est librement déplaçable par l'utilisateur dans un plan ou dans un espace à trois dimensions. Le déplacement de l'objet 4 est actionné manuellement par l'utilisateur. Par exemple, l'objet 4 est conformé pour être directement manipulé à la main.

Sur la figure 1 une trajectoire rectiligne 6 possible pour l'objet 4 est représentée. Dans la suite de cette description on note V la vitesse de déplacement de l'objet 4 le long d'une trajectoire rectiligne parallèle à la trajectoire 6.

L'instrument 2 comporte également un appareil 10 de conversion des déplacements de l'objet 4 en un signal directement audible par un être humain. A cet effet, l'appareil 10 est équipé :

- d'un capteur 12 de champ magnétique propre à convertir un champ magnétique mesuré en un signal électrique,
- un convertisseur analogique-numérique 14 propre à échantillonner le signal électrique généré par le capteur 12 pour obtenir une succession temporelle de mesures du champ magnétique, et
- un calculateur électronique 16 apte à traiter la succession temporelle de mesures produites par le convertisseur 14 pour commander, en réponse, un générateur 18 d'un signal directement audible par l'utilisateur.

Le capteur 12 est situé à proximité de l'objet 4. On considère que le capteur 12 est à proximité de l'objet 4 lorsque tout déplacement de l'objet 4 se traduit par une modification du signal audible perceptible par l'utilisateur.

Ici, la plus courte distance entre le capteur 12 et la trajectoire 6 est notée D.

De préférence, le capteur 12 est un capteur triaxe, c'est-à-dire apte à mesurer les composantes du champ magnétique le long de trois directions orthogonales X, Y et Z. Ici, la direction X est parallèle à la trajectoire 6.

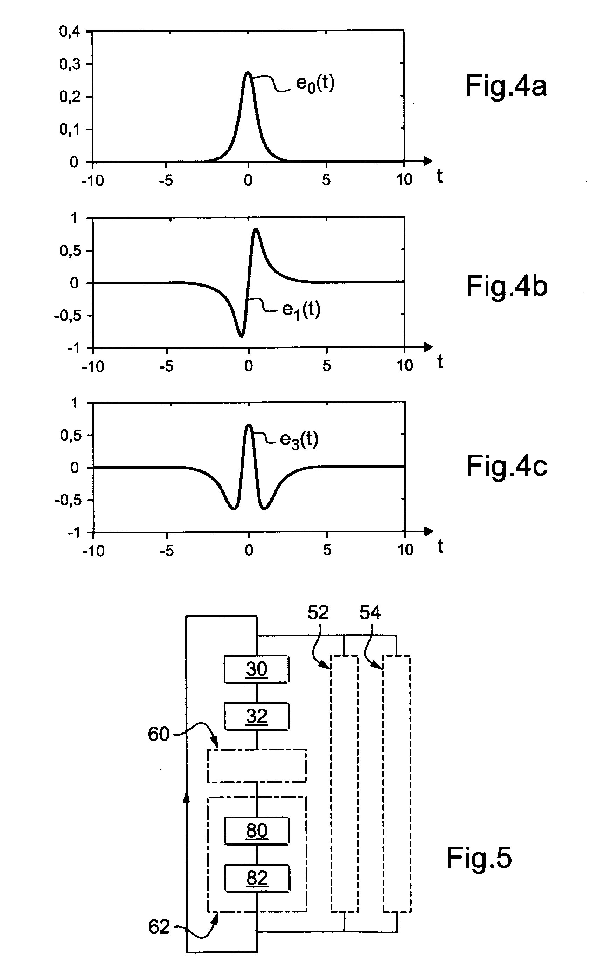

Typiquement, le calculateur 16 est un calculateur programmable apte à exécuter des instructions enregistrées sur un support d'enregistrement d'informations. A cet effet, le calculateur 16 est raccordé à une mémoire 20 comportant les instructions et les données nécessaires à l'exécution du procédé de la figure 2 ou de la figure 5.

Par exemple, le générateur 18 est un haut-parleur ou un ensemble d'haut-parleurs.

Le fonctionnement de l'instrument 2 va maintenant être décrit en regard du procédé de la figure 2.

Pour jouer de l'instrument 2, l'utilisateur déplace manuellement l'objet 4 à proximité du capteur 2.

Lors d'une étape 30, le capteur 12 mesure le champ magnétique modifié par le déplacement de l'objet 4. En réponse, il génère trois signaux électriques proportionnels, respectivement, aux composantes x, y et z du champ magnétique mesurées le long des directions X, Y et Z.

Dans la suite de cette description, seuls les traitements de la composante x sont décrits en détail. Les traitements des autres composantes mesurées sont similaires et découlent des explications données pour la composante x.

La figure 3 représente un exemple possible de forme d'onde, en fonction du temps, d'un signal électrique 31 généré par le capteur 12 pour la composante x.

Lors d'une étape 32, le convertisseur 14 échantillonne le signal électrique 31 pour produire une succession temporelle de mesures du champ magnétique qui est transmise au calculateur 16 au fur et à mesure de la production de chaque échantillon.

Lors de l'étape 32, le calculateur 16 acquiert une succession temporelle $S(t_c)$ de mesures de la composante x réalisées pendant une fenêtre temporelle $\Delta T$ de durée prédéterminée et s'achevant à l'instant courant $t_c$. La fenêtre temporelle $\Delta T$ est représentée sur cette figure 3. Par exemple, la fréquence d'échantillonnage du convertisseur 14 est de 200 Hz et le nombre d'échantillons de la séquence $S(t_c)$ est de 255. La durée $\Delta T$ est donc de 1250 ms.

Lors d'une étape 34, le calculateur construit à partir de cette succession temporelle de mesure plusieurs signaux $s_i(t)$ représentant chacun une caractéristique i indépendante du champ magnétique mesuré. Par caractéristique « indépendante » on désigne ici une caractéristique susceptible de varier indépendamment des autres caractéristiques du champ magnétique mesuré. Par exemple, les signaux $s_i(t)$ sont non corrélés.

Ici, lors d'une opération 40, le calculateur 16 procède à un filtrage adapté de la séquence $S(t_c)$ sur une base de fonctions d'Anderson afin de construire les signaux $s_i(t)$.

Un tel filtrage adapté sur une base de fonctions d'Anderson est par exemple décrit dans le document suivant :

R. Blanpain, « Traitement en temps réel du signal issu d'une sonde magnétométrique pour la détection d'anomalie magnétique », thèse I.N.P.G., Octobre 1979.

Les figures 4a à 4c représentent les formes d'onde de trois fonctions orthogonales $e_0(t)$, $e_1(t)$ et $e_3(t)$ d'Anderson en mode champ. Ces trois fonctions sont définies par les relations suivantes :

$$e_0(U) = K_0 \frac{1}{(1+U^2)^{5/2}}$$

$$e_1(U) = K_1 \frac{U}{(1+U^2)^{5/2}}$$

$$e_2(U) = K_2 \frac{1-7U^2}{(1+U^2)^{5/2}}$$

où :

- U = (V/D)t, t étant le temps;
- les coefficients $K_0$, $K_1$ et $K_2$ sont des constantes de normalisation choisies pour avoir une base orthonormée.

La projection de la séquence $S(t_c)$ sur une des fonctions $e_i(t)$ est par exemple réalisée en calculant le coefficient $\alpha_i$ de corrélation entre la séquence $S(t_c)$ et la fonction $e_i(t)$. Ce calcul est détaillé dans le document cité ci-dessus.

Plus précisément, chaque fonction $e_i(t)$ dépend non seulement du temps t mais aussi du rapport V/D. Ici, un jeu de j valeurs du rapport V/D est construit au préalable, j étant supérieur à un et, de préférence supérieur à deux ou dix. La fonction $e_i(t)$ obtenue pour une valeur particulière du rapport V/D est notée $e_{ij}(t)$, où i est l'indice de la fonction d'Anderson (i =0, 1 ou 2) et j est l'indice d'une valeur particulière du rapport V/D choisie dans le jeu de valeur construit au préalable. Les fonctions $e_{ij}(t)$ sont pré-enregistrées dans la mémoire 20.

Lors de l'étape 40, la séquence $S(t_c)$ est projetée sur chacune des fonctions $e_{ij}(t)$ enregistrées. On obtient ainsi j coefficients $\alpha_{ij}$ de corrélation entre cette séquence $S(t_c)$ et la fonction $e_{ij}(t)$ correspondante.

Pour chaque indice j, une énergie $E_j(t_c)$ est calculée à l'aide de la relation suivante :

$$E_j(t_c) = {\alpha_0}_j{}^2 + {\alpha_1}_j{}^2 + {\alpha_2}_j{}^2$$

Ensuite, toujours lors de l'étape 40, le calculateur 16 sélectionne la valeur m de l'indice j qui maximisent l'énergie $E_j(t_c)$. Cette valeur m correspond à un jeu de coefficients $\alpha_{im}$.

Ensuite, lors d'une étape 42, un filtrage est réalisé pour maximiser la vraisemblance entre la séquence $S(t_c)$ et les fonctions de la base d'Anderson. Par exemple, lors de l'étape 42, l'énergie $E_m(t_c)$ est comparée aux énergies $E_m(t_c-1)$ et $E_m(t_c-2)$ calculées, respectivement, lors des deux itérations précédentes de l'étape 40.

De nouveaux signaux $s_i(t)$ sont construits uniquement si les deux relations suivantes sont satisfaites :

$$E_m(t_c) < E_m(t_c-1),$$

et

$$E_m(t_c-1) > E_m(t_c-2)$$

Dans l'affirmatif, le calculateur construit les signaux $s_i(t)$ suivants :

$$s_0(t) = \alpha_{0m} * e_{0m}(t),$$

$$s_1(t) = \alpha_{1m} * e_{1m}(t),$$

et

$$s_2(t) = \alpha_{2m} * e_{2m}(t)$$

où l'indice m et les coefficients $\alpha_{im}$ sont ceux déterminés lors de l'itération précédente de l'étape 40, c'est-à-dire ceux déterminés à partir de la séquence $S(t_c-1)$.

Si de nouveaux signaux $s_i(t)$ sont construits, le calculateur 16 procède à une étape 50 de réglage de différents paramètres indépendants d'un signal audible joué par le générateur 18. Par exemple, les paramètres du signal audible sont choisis dans le groupe comprenant le volume, le timbre, la fréquence d'un son et la durée d'un son.

Par exemple, la valeur m est utilisée pour sélectionner un jeu de trois notes $n_i$ différentes. Les valeurs des coefficients $\alpha_{im}$ sont utilisées pour régler le volume d'une notes ni respective. Ainsi, quatre caractéristiques du champ magnétique mesuré et donc du déplacement de l'objet 4 sont simultanément présentées à l'utilisateur, à savoir les coefficients $\alpha_{im}$ de corrélation avec les fonctions d'Anderson de champ et le rapport V/D.

La corrélation entre la composante x et une des fonctions $e_i(t)$ est maximale lorsque l'objet 4 est déplacé à vitesse constante V le long d'une trajectoire rectiligne parallèle à la direction X avec son champ dipolaire aligné sur l'une des trois directions X, Y ou Z. Dans ce cas, la composante x est uniquement corrélée avec une seule des trois fonctions $e_i(t)$. Ainsi, les signaux $s_i(t)$ permettent de rendre perceptible simultanément l'orientation de l'objet 4 et la trajectoire suivie par l'objet 4.

Dans un autre mode de réalisation, les valeurs des coefficients $\alpha_{im}$ sont utilisées pour contrôler le timbre d'une note ni jouée respective. Les coefficients $\alpha_{im}$ peuvent aussi être utilisés pour contrôler la fréquence d'une note ou la durée d'une note.

Il est également possible d'utiliser les formes d'onde des signaux $s_i(t)$. Par exemple, ces formes d'onde sont directement utilisées pour générer un signal sonore ayant la même enveloppe temporelle.

A l'issu de l'étape 50, le procédé retourne à l'étape 30. Ce qui a été décrit précédemment est réitéré pour une fenêtre temporelle $\Delta T$ décalée d'un échantillon dans le temps. La séquence temporelle traitée est alors la séquence $S(t_c+1)$.

Ce qui vient d'être décrit dans le cas particulier de la composante x du champ magnétique mesuré est également réalisé en parallèle, lors d'étapes 52 et 54, respectivement, pour les composantes y et z. Ainsi, le générateur 18 joue également en parallèle de signaux audibles représentant des caractéristiques des composantes y et z.

La figure 5 représente un autre procédé de conversion du déplacement de l'objet 4 en un signal directement audible par un être humain qui peut être implémenté dans l'appareil 10. Le procédé de la figure 5 est identique au procédé de la figure 2 à l'exception des étapes 34 et 50 qui sont remplacées, respectivement, par des étapes 60 et 62.

Lors de l'étape 60, le calculateur 16 utilise un banc de douze filtres $F_i$ pour construire les signaux $s_i(t)$, où i est l'indice du filtre.

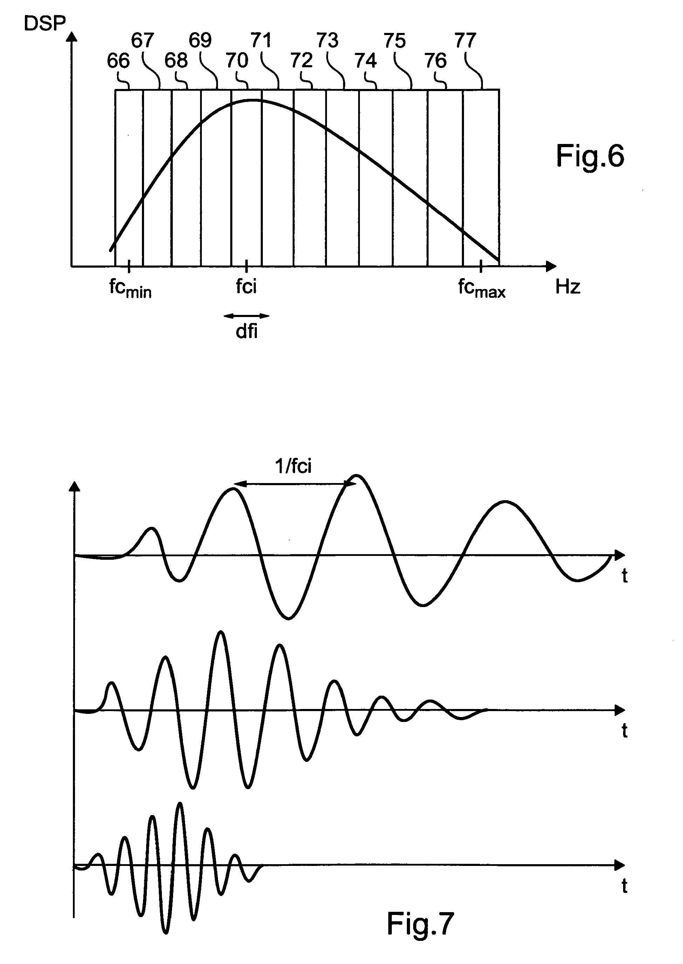

La figure 6 représente les bandes passantes 66 à 77 à -3 dB de chacun des filtres $F_i$ dans un graphe où l'abscisse est graduée en fréquences. Pour simplifier la figure 6, l'échelle de l'abscisse n'est pas linéaire. Ces bandes passantes sont contiguës et ne se chevauchent pas. Ici, la bande passante de chaque filtre $F_i$ se caractérise par une fréquence centrale $fc_i$ et par une largeur de bande passante à -3 dB $df_i$. Le facteur de qualité $Q_i$ de chaque filtre $F_i$ est défini par la relation suivante :

$$Q_i = fc_i/df_i$$

Ici, les facteurs de qualité $Q_i$ sont tous égaux. Un tel choix permet de réaliser une analogie entre les signaux $s_i(t)$ construits et la théorie des notes de musique. Selon cette analogie, la réponse de chaque filtre correspond à une note et la réponse du banc de filtres donne un accord. La largeur de l'intervalle de fréquence entre la plus petite fréquence centrale $fc_{min}$ et la plus grande fréquence centrale $fc_{max}$ couvre l'équivalent d'une octave et le nombre de filtres est l'équivalent d'un nombre de demi-tons. La fréquence $fc_{min}$ et la largeur $df_{min}$ sont choisies de manière à éliminer les composantes continues du champ magnétique mesuré.

Lors de l'étape 60, le calculateur 16 construit les réponses $s_i(t)$ de chacun des filtres $F_i$ excité en entrée par la séquence $S(t_c)$.

La figure 7 illustre schématiquement la forme d'onde de trois signaux $s_i(t)$ construits par trois filtres $F_i$ distincts en réponse à la même séquence $S(t_c)$.

Lors de l'étape 62, les signaux $s_i(t)$ sont utilisés pour régler le signal audible généré. Par exemple, lors d'une opération 80, le calculateur 16 comprime la réponse $s_i(t)$ du filtre $F_i$ pour que sa durée soit égale à la période d'échantillonnage. Cette opération 80 est réalisée pour chacune des réponses $s_i(t)$ de chacun des filtres du banc de filtres.

Ensuite, lors d'une opération 82, les réponses $s_i(t)$ comprimées obtenues successivement en réponse aux séquences $S(t_c)$, $S(t_c+1)$, $S(t_c+2)$, ... d'un même filtre $F_i$ sont mis bout à bout pour former un signal sonore continu. Le générateur 18 joue simultanément les différents signaux sonores continus ainsi obtenus à partir de la réponse de chaque filtre $F_i$.

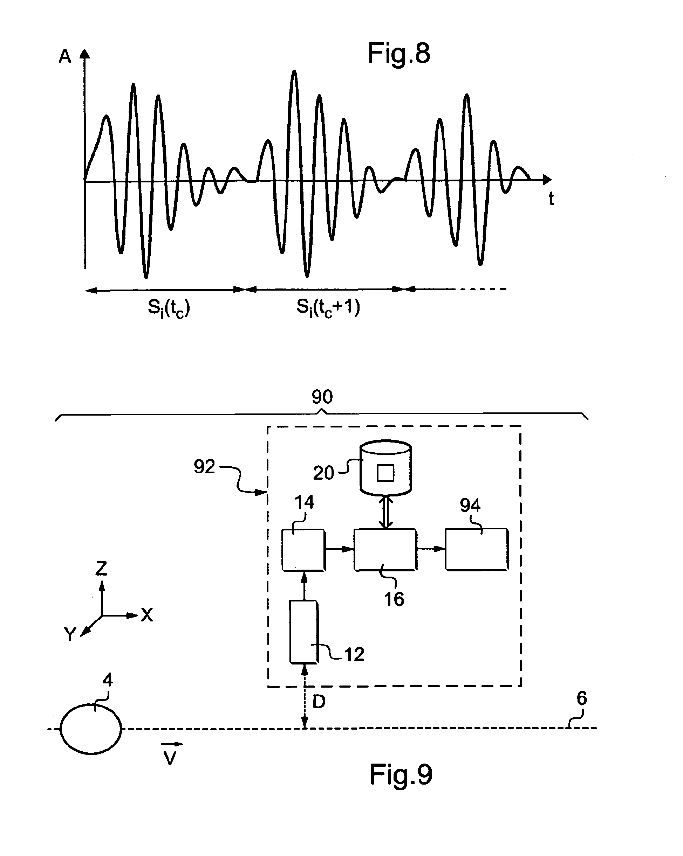

Un exemple d'un tel signal sonore continu est illustré sur la figure 8. Sur cette figure, les séquences $s_i(t)$ successives sont notées $s_i(t_c)$, $s_i(t_c+1)$, ....

La figure 9 représente un instrument 90 générant un signal directement perceptible par un être humain autrement que par l'ouïe. L'instrument 90 est identique à l'instrument 2 sauf que l'appareil 10 est remplacé par un appareil 92 de conversion des déplacements de l'objet 4 en un signal directement perceptible autrement que par l'ouïe. Par exemple, ce signal directement perceptible est un signal visuel, olfactif ou perceptible au touché. A cet effet, l'appareil 92 est identique à l'appareil 10 sauf que le générateur 18 est remplacé par un générateur 94 de ce signal directement perceptible autrement que par l'ouïe.

Par exemple, le générateur 94 génère un signal visuel. Dans ce cas, les signaux $s_i(t)$ sont utilisés pour modifier un paramètre de ce signal visuel choisi dans le groupe comprenant la direction d'un faisceau lumineux, la couleur d'un faisceau lumineux ou d'un pixel d'une image, l'intensité d'un faisceau lumineux ou d'un pixel de l'image.

Par exemple, les signaux $s_i(t)$ sont utilisés pour piloter :

- l'angle d'éclairage d'une scène,
- la gamme de l'éclairage d'une scène (nuances d'éclairage d'une scène allant des couleurs chaudes aux couleurs froides), ou
- l'intensité de l'éclairage.

Lorsque les signaux $s_i(t)$ sont le résultat d'une projection sur trois fonctions orthogonales, les trois coefficients $\alpha_{im}$ sont utilisés pour coder la couleur d'un pixel ou d'en ensemble de pixels. Par exemple, chaque coefficient $\alpha_{im}$ pilote le niveau d'une des couleurs de base dans un codage de couleur RVB (Rouge Vert Bleu).

De nombreux autres modes de réalisation sont possibles. Par exemple, les signaux $s_i(t)$ sont obtenus par un filtrage adapté sur d'autres types de base de fonctions d'Anderson que celle décrite en regard des figures 4a à 4c. Par exemple, il peut s'agir d'une base de fonctions d'Anderson en mode gradient.

Il est également possible d'utiliser d'autres bases de fonctions que celles d'Anderson. Par exemple, des ondelettes peuvent être utilisées de manière à obtenir une décomposition du champ magnétique mesuré sur une base d'ondelettes.

La construction des signaux $s_i(t)$ peut aussi être obtenue en filtrant la succession temporelle de mesures à l'aide d'un banc de filtres passe-bas ou passe haut ou passe bande judicieusement agencés de manière à produire des signaux « intéressants » d'un point de vue musical.

En variante, le capteur de champ magnétique peut être un capteur vectoriel de champ magnétique monoaxe ou biaxe ou plus que triaxe ou un capteur scalaire de champ magnétique

L'objet 4 n'est pas nécessairement un aimant permanent. Il peut également s'agir d'un électroaimant ou de tout autre objet dont le matériau est susceptible de modifier le champ magnétique mesuré par le capteur 12 lorsqu'il est déplacé. Ainsi, l'objet 4 peut être un simple noyau magnétique qui déforme les lignes d'un champ magnétique préexistant. Le champ magnétique préexistant peut être créé par un électroaimant fixe par rapport au capteur 12. Par exemple, dans ce dernier cas, le noyau magnétique sera un noyau ferromagnétique.

Le déplacement de l'objet 4 peut être guidé dans une ou plusieurs directions afin de restreindre la liberté de déplacement de l'objet 4 à cette ou ces directions.

En variante, les signaux $s_i(t)$ construits peuvent êtres de signaux corrélés les uns aux autres.

Les paramètres du signal directement perceptible peuvent aussi être réglé à partir de toute fonction des coefficients $\alpha_{im}$. Par exemple, au moins l'un des paramètres est réglé en fonction de $\alpha_{im}^2$.

Le générateur 18 peut être autre chose qu'un haut-parleur. Par exemple, le générateur 18 comprend plusieurs marteaux électriquement actionnables et plusieurs tiges ou cordes différentes en vis-à-vis de chacun de ces marteaux. Le calculateur 16 commande les déplacements des différents marteaux en fonction des signaux $s_i(t)$ construits. L'instrument de musique ainsi obtenu est alors proche d'un instrument à percussions.

Dans un autre mode de réalisation, les modes de réalisations des figures 1 et 9 sont combinés pour générer à la fois des signaux directement audibles et des signaux directement perceptibles par d'autre sens que l'ouïe. Par exemple, le générateur génère à la fois des signaux audibles et visuels.

Il est également possible de superposer aux signaux directement perceptibles précédemment décrits d'autres signaux directement perceptibles indépendants des déplacements de l'objet 4. Par exemple, ces autres signaux sont représentatifs de signaux magnétiques existant naturellement dans l'environnement du capteur 12 tels que :

- des signaux géomagnétiques issus de la terre, de la magnétosphère, de l'interaction du vent solaire avec la magnétosphère,
- des signaux engendrés par les mouvements de la mer, comme les vagues, les orages magnétiques, ..., et
- des signaux artificiels engendrés par l'activité de l'homme, comme le champ magnétique créé par les courants du secteur, les mouvements d'objets divers comme les véhicules, les pièces mobiles de certains objets, ...etc.

Ce qui a été décrit ici dans le cas particulier où c'est l'objet magnétique qui se déplace par rapport au capteur s'applique également au cas inverse où c'est le capteur qui se déplace par rapport à l'objet magnétique.

**Revendications**

1. Procédé de conversion d'un déplacement d'un objet magnétique par rapport à un capteur de champ magnétique en un signal directement perceptible par un être humain, ce procédé comportant :

   - la mesure (30) d'un champ magnétique modifié en fonction du déplacement de l'objet magnétique, et
   - le réglage (50 ; 62) d'au moins un paramètre du signal directement perceptible en fonction du champ magnétique mesuré,
   **caractérisé en ce que** le procédé comprend également :
   - l'acquisition (32) d'une succession temporelle de mesures du champ magnétique pendant une fenêtre temporelle glissante de durée prédéterminée,
   - la construction (34 ; 60) à partir de cette succession temporelle de mesures acquise de plusieurs signaux représentant chacun une caractéristique du champ magnétique mesuré fonction d'une caractéristique correspondante du déplacement de l'objet, et
   - le réglage (50 ; 62) de plusieurs paramètres du signal directement perceptible en fonction de ces signaux pour rendre directement perceptible ces caractéristiques.

2. Procédé selon la revendication 1, dans lequel au moins l'un des signaux construits est indépendant de la position dans l'espace de l'objet magnétique.

3. Procédé selon l'une quelconque des revendications précédentes, dans lequel :

   - les signaux sont susceptible de varier indépendamment les uns des autres, et
   - le réglage (50 ; 62) de chaque paramètre est fonction d'un signal construit respectif de manière à rendre directement et simultanément perceptibles chacune des caractéristiques du champ magnétique indépendamment les unes des autres.

4. Procédé selon l'une quelconque des revendications précédentes, dans lequel la construction (34) des signaux est obtenue par filtrage adapté de la succession temporelle de mesures sur une base de plusieurs fonctions orthogonales.

5. Procédé selon la revendication 4, dans lequel les fonctions orthogonales sont des fonctions d'Anderson.

6. Procédé selon l'une quelconque des revendications 1 à 3, dans lequel la construction (62) des signaux est obtenue en filtrant la succession temporelle de mesures à l'aide d'un banc de filtres dont les bandes passantes à -3 dB ne se chevauchent pas et dont les facteurs de qualité sont égaux.

7. Procédé selon la revendication 6, dans lequel le banc de filtres est composé de douze filtres.

8. Procédé selon l'une quelconque des revendications précédentes, dans lequel le signal directement perceptible par un être humain est un signal audible et les paramètres réglés du signal audible sont choisis dans le groupe comprenant le volume, le timbre, la fréquence d'un son et la durée d'un son.

9. Procédé selon l'une quelconque des revendications 1 à 7, dans lequel le signal directement perceptible est un signal visuel et les paramètres réglés de ce signal visuel sont choisis dans le groupe comprenant la direction d'un faisceau lumineux, la couleur d'un faisceau lumineux ou d'un pixel d'un écran, l'intensité d'un faisceau lumineux ou d'un pixel d'un écran.

10. Appareil de conversion d'un déplacement d'un objet magnétique par rapport à un capteur de champ magnétique en un signal directement perceptible par un être humain, cet appareil comportant :

    - le capteur (12) apte à mesurer un champ magnétique modifié en fonction du déplacement de l'objet magnétique,

- un calculateur (16) apte à régler au moins un paramètre du signal directement perceptible en fonction du champ magnétique mesuré, **caractérisé en ce que** le calculateur (16) est apte :

    • à acquérir une succession temporelle de mesures du champ magnétique pendant une fenêtre temporelle glissante de durée prédéterminée
    • à construire à partir de cette succession temporelle de mesures acquise plusieurs signaux représentant chacun une caractéristique du champ magnétique mesuré fonction d'une caractéristique correspondante du déplacement de l'objet, et
    • à régler plusieurs paramètres du signal directement perceptible en fonction de ces signaux pour rendre directement perceptibles ces caractéristiques.

11. Instrument comportant un objet magnétique (4) déplaçable par un être humain et un appareil (10 ; 90) de conversion des déplacements de l'objet magnétique en un signal directement perceptible par un être humain, **caractérisé en ce que** l'appareille de conversion est conforme à la revendication 10.

**Patentansprüche**

1. Verfahren zur Umwandlung einer Verschiebung eines magnetischen Objekts in Bezug zu einem Magnetfeldsensor in ein von einem menschlichen Wesen direkt wahrnehmbares Signal, wobei dieses Verfahren umfasst:

    - das Messen (30) eines in Abhängigkeit von der Verschiebung des magnetischen Objekts modifizierten Magnetfeldes, und
    - das Einstellen (50; 62) mindestens eines Parameters des direkt wahrnehmbaren Signals in Abhängigkeit von dem gemessenen Magnetfeld,
    **dadurch gekennzeichnet, dass** das Verfahren auch umfasst:
    - die Erfassung (32) einer zeitlichen Abfolge von Messungen des Magnetfeldes während eines gleitenden Zeitfensters von vorbestimmter Dauer,
    - auf Basis dieser erfassten zeitlichen Abfolge von Messungen Konstruktion (34; 60) von mehreren Signalen, die jeweils ein Merkmal des gemessenen Magnetfeldes in Abhängigkeit von einem entsprechenden Merkmal der Verschiebung des Objekts darstellen, und
    - Einstellen (50; 62) von mehreren Parametern des direkt wahrnehmbaren Signals in Abhängigkeit von diesen Signalen, um diese Merkmale direkt wahrnehmbar zu machen.

2. Verfahren nach Anspruch 1, bei dem mindestens eines der konstruierten Signale von der Position des magnetischen Objekts im Raum unabhängig ist.

3. Verfahren nach einem der vorhergehenden Ansprüche, bei dem:

    - die Signale unabhängig voneinander variieren können, und
    - die Einstellung (50; 62) jedes Parameters von einem jeweiligen konstruierten Signal abhängig ist, um jedes der Merkmale des Magnetfeldes unabhängig voneinander direkt und gleichzeitig wahrnehmbar zu machen.

4. Verfahren nach einem der vorhergehenden Ansprüche, bei dem die Konstruktion (34) der Signale durch entsprechende Filterung der zeitlichen Abfolge von Messungen auf einer Basis von mehreren orthogonalen Funktionen erhalten wird.

5. Verfahren nach Anspruch 4, bei dem die orthogonalen Funktionen Anderson-Funktionen sind.

6. Verfahren nach einem der Ansprüche 1 bis 3, bei dem die Konstruktion (62) der Signale erhalten wird, indem die zeitliche Abfolge von Messungen mit Hilfe einer Filterbank gefiltert wird, deren Durchlassbereiche bei -3 dB einander nicht überlappen und deren Qualitätsfaktoren gleich sind.

7. Verfahren nach Anspruch 6, bei dem die Filterbank aus zwölf Filtern besteht.

8. Verfahren nach einem der vorhergehenden Ansprüche, bei dem das von einem menschlichen Wesen direkt wahrnehmbare Signal ein hörbares Signal ist, und die eingestellten Parameter des hörbaren Signals in der Gruppe, umfassend die Lautstärke, das Timbre, die Frequenz eines Tons und die Dauer eines Tons, ausgewählt sind.

9. Verfahren nach einem der Ansprüche 1 bis 7, bei dem das direkt wahrnehmbare Signal ein visuelles Signal ist, und die eingestellten Parameter dieses visuellen Signals in der Gruppe, umfassend die Richtung eines Lichtstrahls, die Farbe eines Lichtstrahls oder eines Pixels eines Bildschirms, die Stärke eines Lichtstrahls oder eines Pixels eines Bildschirms, ausgewählt sind.

10. Gerät zur Umwandlung einer Verschiebung eines magnetischen Objekts in Bezug zu einem Magnetfeldsensor in ein von einem menschlichen Wesen direkt wahrnehmbares Signal, umfassend:

- den Sensor (12), der geeignet ist, ein in Abhängigkeit von der Verschiebung des magnetischen Objekts modifiziertes Magnetfeld zu messen,
- einen Rechner (16), der geeignet ist, mindestens einen Parameter des direkt wahrnehmbaren Signals in Abhängigkeit von dem gemessenen Magnetfeld einzustellen, **dadurch gekennzeichnet, dass** der Rechner (16) geeignet ist:

* eine zeitliche Abfolge von Messungen des Magnetfeldes während eines gleitenden Zeitfensters von vorbestimmter Dauer zu erfassen,
* auf Basis dieser erfassten zeitlichen Abfolge von Messungen mehrere Signale zu konstruieren, die jeweils ein Merkmal des gemessenen Magnetfeldes in Abhängigkeit von einem entsprechenden Merkmal der Verschiebung des Objekts darstellen, und
* mehrere Parameter des direkt wahrnehmbaren Signals in Abhängigkeit von diesen Signalen einzustellen, um diese Merkmale direkt wahrnehmbar zu machen.

11. Instrument, umfassend ein magnetisches Objekt (4), das von einem menschlichen Wesen verschiebbar ist, und ein Gerät (10; 90) zur Umwandlung der Verschiebungen des magnetischen Objekts in ein von einem menschlichen Wesen direkt wahrnehmbares Signal, **dadurch gekennzeichnet, dass** das Umwandlungsgerät dem Anspruch 10 entspricht.

**Claims**

1. Method for converting a movement of a magnetic object relative to a magnetic field sensor into a signal directly perceptible by a human being, this method comprising:

- measuring (30) a magnetic field modified depending on the movement of the magnetic object; and
- adjusting (50; 62) at least one parameter of the directly perceptible signal depending on the measured magnetic field;
**characterized in that** the method also comprises:
- acquiring (32) a temporal succession of measurements of the magnetic field during a sliding time window of preset duration;
- constructing (34; 60) from this acquired temporal succession of measurements a plurality of signals each representing a characteristic of the measured magnetic field depending on a corresponding characteristic of the movement of the object; and
- adjusting (50; 62) a plurality of parameters of the directly perceptible signal depending on these signals in order to make these characteristics directly perceptible.

2. Method according to Claim 1, in which at least one of the constructed signals is independent of the position in space of the magnetic object.

3. Method according to any one of the preceding claims, in which:

- the signals are capable of varying independently from one another; and
- the adjustment (50; 62) of each parameter is dependent on a respective constructed signal so as to make, independently of one another, each of the characteristics of the magnetic field directly and simultaneously perceptible.

4. Method according to any one of the preceding claims, in which the construction (34) of the signals is obtained by suitable filtering of the temporal succession of measurements with a basis of a plurality of orthogonal functions.

5. Method according to Claim 4, in which the orthogonal functions are Anderson functions.

6. Method according to any one of Claims 1 to 3, in which the construction (62) of the signals is obtained by filtering the temporal succession of measurements using a bank of filters the -3 dB pass bands of which do not overlap and the quality factors of which are equal.

7. Method according to Claim 6, in which the bank of filters is composed of twelve filters.

8. Method according to any one of the preceding claims, in which the signal directly perceptible by a human being is an audible signal and the adjusted parameters of the audible signal are chosen from the group comprising volume, tone, the frequency of a sound and the duration of a sound.

9. Method according to any one of Claims 1 to 7, in which the directly perceptible signal is a visual signal and the adjusted parameters of this visual signal are chosen from the group comprising the direction of a light beam, the colour of a light beam or a pixel of a screen, and the brightness of a light beam or of a pixel of a screen.

10. Apparatus for converting a movement of a magnetic object relative to a magnetic field sensor into a signal directly perceptible by a human being, this apparatus comprising:

- the sensor (12) able to measure a magnetic field modified depending on the movement of the magnetic object; and
- a processor (16) able to adjust at least one parameter of the directly perceptible signal depending on the measured magnetic field; **characterized in that** the processor (16) is able:

• to acquire a temporal succession of measurements of the magnetic field during a sliding time window of preset duration;
• to construct from this acquired temporal succession of measurements a plurality of signals each representing a characteristic of the measured magnetic field depending on a corresponding characteristic of the movement of the object; and
• to adjust a plurality of parameters of the directly perceptible signal depending on these signals in order to make these characteristics directly perceptible.

11. Instrument comprising a magnetic object (4) that is movable by a human being and an apparatus (10; 90) for converting movements of the magnetic object into a signal that is directly perceptible by a human being, **characterized in that** the converting apparatus is according to Claim 10.

# Fig.1

# Fig.2

# Fig.3

Fig.4a

Fig.4b

Fig.4c

Fig.5

Fig.6

Fig.7

Fig.8

$S_i(t_c)$    $S_i(t_c+1)$

Fig.9

**EP 2 446 230 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004085598 A

**Littérature non-brevet citée dans la description**

- **R. BLANPAIN.** Traitement en temps réel du signal issu d'une sonde magnétométrique pour la détection d'anomalie magnétique. *thèse I.N.P.G.,* Octobre 1979